# EUROPEAN PATENT APPLICATION

(11) **EP 2 434 323 A1**
(43) Date of publication of application: **28.03.2012**
(21) Application number: 11182755.6
(22) Date of filing: 26.09.2011
(51) Int. Cl.: G02B 6/44

(54) **Modular patch box**

(30) Priority: 27.09.2010 NL 2005404
(71) Applicant: Draka Comteq B.V., 5651 CA Eindhoven (NL)
(72) Inventor: van Trigt, Kees, 3067 NC Rotterdam (NL); Zeng, Jianming, 5621 BE Eindhoven (NL); Doorn, Mijndert, 2741 TM Waddinxveen (NL)
(74) Representative: Jansen, Cornelis Marinus

(57) **Abstract**

Modular patch box, comprising:
-at least one first module (3), for example an operator module, connectable to a first cable;
-at least one second module (4), for example a customer module, connectable to a second cable;
-at least one patch cord for interconnecting a first and second module;
-at least one patch cord storage means (5) for storing the patch cords, such that at least part of the patch cord is located in the patch cord storage means when the cord interconnects two modules (3, 4).

## Description

The invention relates to a patch box.

Known patching systems provide a means for interconnecting clients to operators. They serve to connect several client cables (for example optical communication cables) to a number of operator cables, for example in an apartment building. In the known systems, dedicated (relatively short) patch cords are used, to set the desired interconnections between the various cables.

In a multi dwelling unit (MDU), a known patching method makes use of fixed wall mount boxes, one for all the fiber cables connected to each apartment in the MDU and one for each operator (i.e. respective operator cable). By means of optical patchcords, each operator can make a connection to each apartment. However, this solution lacks flexibility, since it can not anticipate on a growing model where the number of apartments connected with optical fiber and the number of apartment inhabitants that want a service from an operator can start with a low take-rate and grow during time. Also, problem of the known patching system is that more than one operator technician has to make physical contact with his optical fiber cables to optical fiber cables installed in a multi dwelling unit, to be able to provide services to customers.

The present invention aims to solve at least part of the above-mentioned problems. Particularly, the invention aims to provide a more flexible patching means, for example to be used in a multi dwelling unit, wherein the use (such as patching, disconnecting and/or repatching) can be carried out in an efficient manner.

To this aim, the invention provides a patch box that is characterised by the features of claim 1.

Advantageously, there is provided a modular patch box, comprising:
- at least one first module, for example an operator module, connectable to a first cable;
- at least one second module, for example a customer module, connectable to a second cable;
- at least one patch cord for interconnecting a first and second module;
- at least one patch cord storage means for storing the patch cords, such that at least part of the patch cord is located in the patch cord storage means when the cord interconnects two modules.

By providing a modular patch box, high patching flexibility can be achieved. The patch box can be provided with a suitable number of first modules, and a suitable number of second modules, depending on the number of first and second cables that have to be interconnected. Preferably, after having installed the patch box, additional first and/or second modules can be added if desired. Similarly, preferably, each of the module can be removed from the patch box (for example in case a respective interconnection to a certain cable is not required anymore). Patch cords are available as well, to provide the desired interconnections between the modules.

Since the patch cord storage means are for storing the patch cords, such that at least part of the patch cord is located in the patch cord storage means when the cord interconnects two modules, an efficient handling of the patch box can be achieved. Patch cord sections can be kept separate from the modules, in the storage means, so that those sections do not obstruct access to the modules.

In a preferred embodiment, each first and/or second module includes a cable connector part that is adjustable between a first position, for connecting or disconnecting a patch cord thereto, and a second, stowed away, position. For example, the module's cable connector part can be arranged to be translated (in a linear movement) between the first and second position, for example out of and into the box.

Preferably, the cable connector part is pivotal, over a first pivot axis, between the first and second position. In that case, cables that are connected to the cable connector part can be arranged to extend along the first pivot axis, so that pivoting movement of the cable connector part does not lead to any substantial longitudinal movement of those cables. As a result, parts of cables located externally of the module remain substantially in place during pivoting of the module's cable connector part, leading to a very efficient handling of the patch box (for example during patching or repatching operations).

Further advantageous embodiments of the invention are described in the dependent claims.

The invention will now be described in more detail on the basis of exemplary embodiments shown in the accompanying drawing. Therein shows:
Figure 1 a front view of a patch box according to an embodiment of the invention, wherein the box is closed;
Figure 2 a perspective front view of the embodiment of Fig. 1, after opening of the patch box, and with one module in an opened condition;
Figure 3 a perspective view of a module of the embodiment shown in Fig. 1, with its cable connector part in a first position;
Figure 4 a perspective view similar to Fig. 3 with the cable connector part in a second position;
Figure 5 schematically a cross-section of a module of the embodiment of Fig. 1;
Figure 6 a perspective view of a patch cord storage means of the embodiment of Fig. 1;
Figure 7 a top view of the a patch cord storage means, showing the compartments without patch cords;
Figure 8 an opened side view of the patch cord storage means, with part of a patch cord in a stored position;
Figure 9 view similar to Fig. 8, with the patch cord being partly retracted to an operating position; and
Figure 10 shows an example of a patch box after installation.

Similar or corresponding features are denoted by similar or corresponding reference signs in this application.

The drawings show a non-limiting example of a modular patch box 1, configured for patching first and second cables, for example one or more operator cables K on one hand and end-user cables U on the other hand. The present box 1 as such includes a number of walls (for example made of metal, plastic, or another material) enclosing a patching space. In the example, the patch box has a first door 1a for covering a first (in this case front) side, wherein the first door 1a can be opened for access to the interior of the patch box via the first side. Also, the patch box 1 has a second door 1b for covering a second (in this case lateral) side, wherein the second door 1b can be opened for access to a patch cord storage means 5 (see below). Optionally, the first door 1a can be locked by a locking device 80, to prevent unauthorised access; the same holds for the second door 1b. In the example, both doors 1a, 1b are pivotally connected to a remaining part of the patch box via respective hinges. In the example, the first door 1a is provided with a transparent door panel, allowing visual inspection of the interior of the patch box when the door is in a closed position.

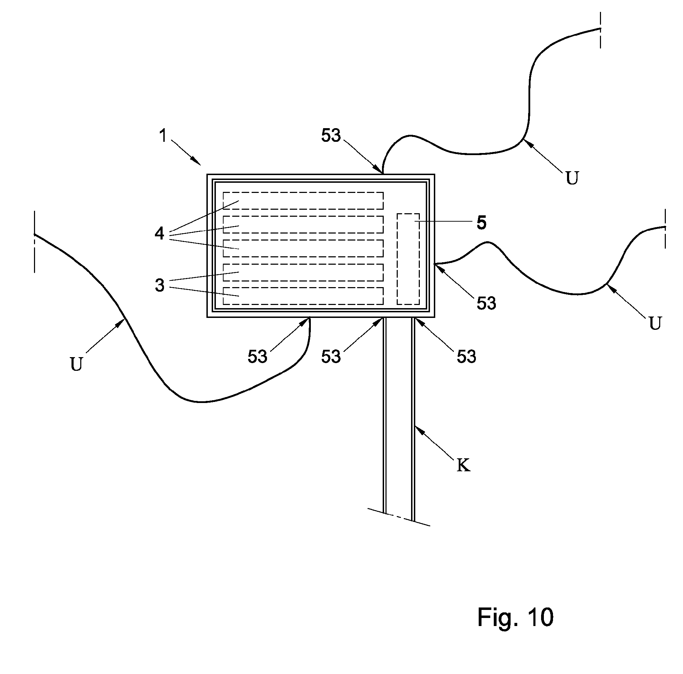

Figure 10 schematically shows the patch box after installation, for example when the box 10 is mounted to a wall of a building. The patch box 1 can be provided with one or more openings 53 for feeding end sections of the various cables K, U, to be patched, into the box (i.e. into said patching space). Such openings can be located in various sections of the patch box 1 (for example in a rear wall and/or in a bottom wall and/or in a top wall and/or in a side wall), as will be appreciated by the skilled person.

Each first cable K can be installed for transmitting signals from a remote operator communication network to and from the patch box 1. The second cables U can be installed for transmitting the signals from the patch box to and from nearby end-user locations, for example local residences or apartments. In a the present example, the first and second cables K, U to be patched are configured for transmission of optical signals, for example fiber optic cables K, U.

The patch box 1 includes patching means 3, 4, P to interconnect one or more first cables K to one or more second cables U, and in particular to allow signal transmission there-between, so that end-user locations are connected to a desired operator communication network. After mounting, the patch box 1 can be available to personnel, for carrying out patching operations, such as making and undoing patches between selected first and second cables K, U.

Advantageously, the patching means are provided by modules 3, 4, and patch cords P (for interconnecting the modules 3, 4, to allow optical signal transmission there-between), as will be explained in the following. In case of optical signals to be transmitted between first and second cables K, U, the patching means are also configured for transmitting such optical signals.

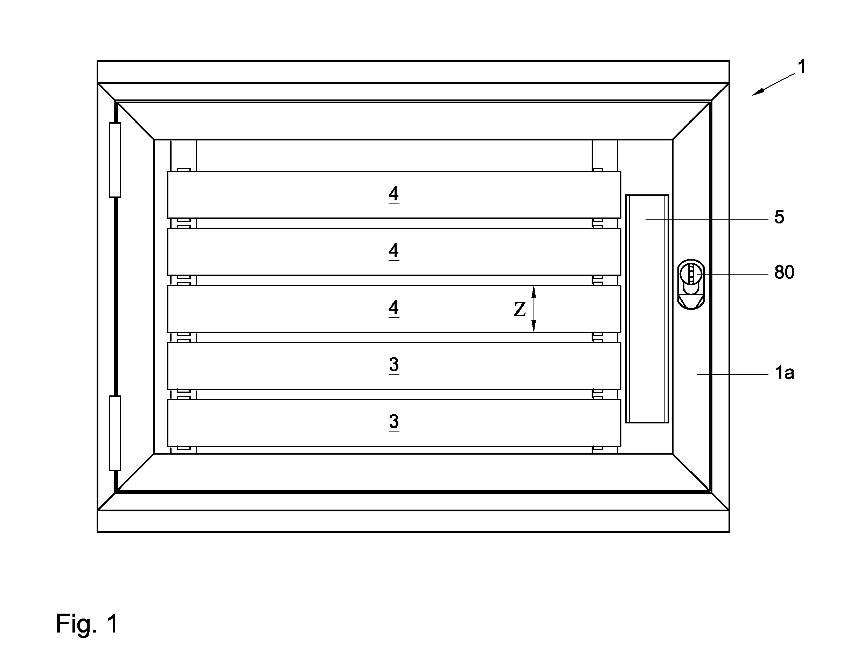

Figures 1-2 show an example of the modular path box 1 in more detail. Particularly, the patch box 1 comprises one or more first modules 3, for example one or more operator modules, each first module 3 being connectable to a first (operator) cable K. The patch box 1 also includes one or more second modules 4, for example customer modules, that are connectable to respective second (customer, end-user) cables U. In a further embodiment, each first module 3 and each second module 4 are configured for transmission of optical signals between cables that are connected there-to.

Particularly, the patch box 1 is configured to hold a plurality of first modules 3 and a plurality of second modules 4. In the example, two first modules 3 and three second modules 4 are shown. Clearly, the patch box can also be provided with a different number of first modules 3, and/or with a different number of second modules 4.

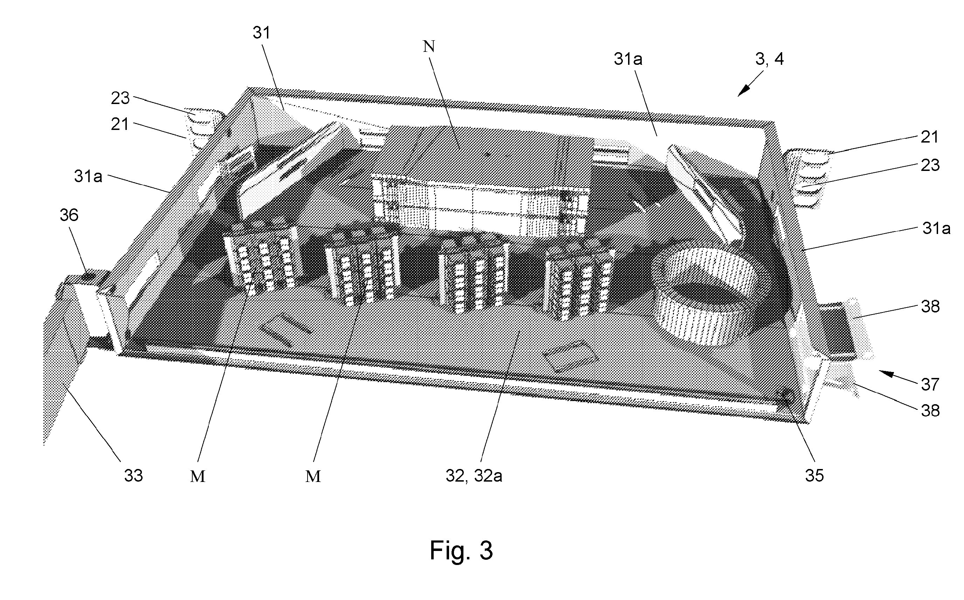

In the present example, the first and second modules 3, 4 all have the same configuration. An example of one of the modules is shown in figures 3-5. Alternatively, first modules 3 can be configured differently than second modules 4.

In the present preferred embodiment, each module 3, 4 is removable held by the patch box 1, for example using removable clicking means, clamping means, screw-threaded connector means, and/or in a different manner. Thus, each module 3, 4 can be removed, for example to be replaced by another module. In a less preferred embodiment, one or more of the modules 3, 4 are attached to the box 1 such that they can not be removed from the box without severely damaging the box and/or module.

Also, in a further embodiment, the patch box 1 can be installed (such as mounted to a wall) with only a limited number of modules 3, 4, for example none, one or two, after which one or more (additional) modules 3, 4 can be mounted into the box 1.

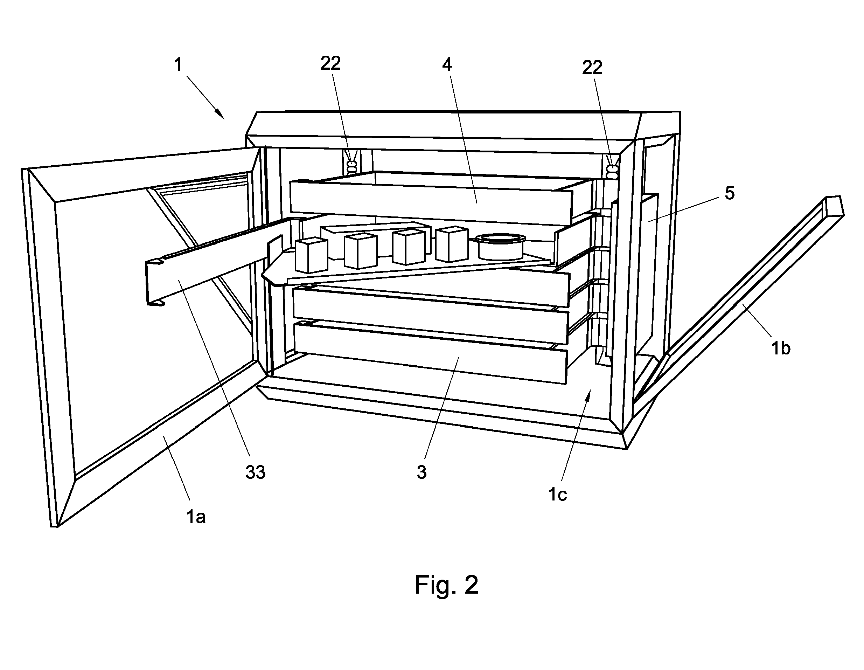

Attaching a module 3, 4 to the box 1 can be achieved in various ways. The present removable modules 3, 4 are each provided with coupling lips 21 (each for example having several passages 23; see figures 3-5), protruding laterally from the module at or near a back side there-of, to be held by module attachment means 22 of the box 1 (see Fig. 2), for example via removable screws or bolts (not shown). In the present example, the module attachment means 22 of the box 1 are formed by two spaced-apart parallel arrays of connector receiving holes, particularly configured for holding screw-thread parts of screw or bolt connectors (inserted in one or more passages 23 of each of said coupling lips 21). During mounting, a module can simple be positioned in the box 1, with the coupling lips 21 on the two module attachment means 22, after which the screw or bolt connectors can be applied to lock the lips 21 to those attachment means 22.

In the present example, the removable modules 3, 4 are independently removable from the box 1. Alternatively, one or more of the modules can be joined together or integrated with each-other, to be coupled to (and removed from) the box simultaneously.

In the present example, the modules 3, 4 all have a generally rectangular cuboid shape (when they are in closed operating condition, as in Fig. 1), and particularly the same shape. Alternatively, modules having mutually different shapes can be applied.

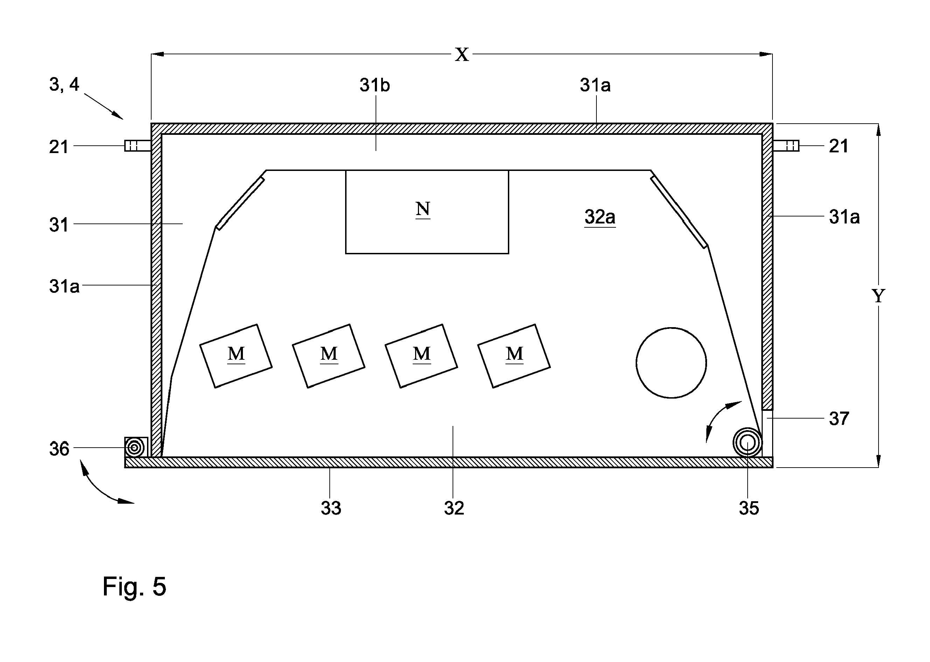

In the present relatively compact configuration, the box 1 is configured to hold an array of modules 3, 4. Preferably, each module 3, 4 has a relatively thin configuration. For example, as follows from figures 1, 5, a thickness Z of a module 3, 4 can be significantly smaller (for example at least two times, particularly at least five times) than each of a module width X and a module depth Y (the thickness Z, width X and depth Y being measured in three respective orthogonal directions, along respective outer sides of the module when it is in an operating condition, as in the drawings). After mounting an array of modules 3, 4, opposite sides of adjacent modules 3, 4 are preferably separated from each other by only a short distance, for example less than 1 cm, particularly less than 5 mm.

Each module 3, 4 is provided with patch components M, N, in this example optical components, ,allowing connection of a flexible patch cord P and first K or second cables U, depending on the module type, for (in this example: optical) transmission of signals there-between.

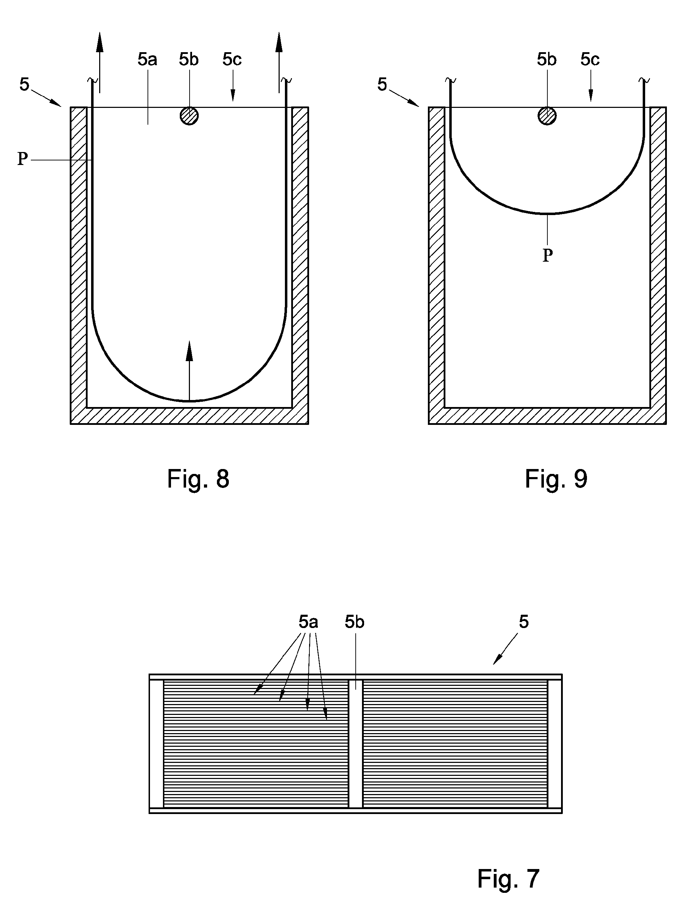

Flexible patch cords P (shown in figures 8-9) serve to (in this example: optically) interconnect first modules to second modules. The flexible patch cords P are known as such. The skilled person will appreciated that each patch cord P includes a connector at each of its two ends, the connector being configured for connecting the cord to a connector receiver, to allow (in this embodiment: optical) signal transmission there-between.

Preferably, in view of efficiency and simplicity, the patch cords P used all have the same length. Alternatively, patch cords P of different lengths are used; in that case, for example, the cords P can be provided with information, for example a colour coding, relating to respective lengths.

Also, each first K and second cable U can be provided with a connector at its end, connecting the cable to a connector receiver, to allow (in this embodiment: optical) signal transmission there-between.

Each patch box module 3, 4 can be provided with one or more patch cord connector receivers, for receiving one or more patch cord connectors. Also, each first module 3 can be provided with one or more cable receivers for receiving one or more connectors of one or more first cables K. Similarly, each second module 4 can be provided with one or more cable receivers for receiving one or more connectors of one or more second cables U.

Said patch components M, N can be configured in various ways. In the present non-limiting embodiment, the patch components include optical connector units M (also called "patch panels") each having a plurality of interconnected optical connectors (12 pairs of two interconnected connectors, in this example) for receiving cable connectors and cord connectors, to allow signal transmission there-between. Each pair interconnected connectors provides an above-mentioned cable connector receiver and a respective patch cord connector receiver.

Also, in case of fiber optics, the patch components can include separate splice cassettes N for holding spliced parts of cable fibers. The present splice cassettes are located between the patch units M and a rear side of a respective patch module. Short interconnecting fibers (so called 'pigtails', i.e. optical connectors with a short length of flexible fiber attached, not shown) can be provided, to be spliced to cable fibers in the splice cassettes N. The pigtails then provide optical interconnection to the patch units M. More particularly, for example, optical fibers from an operator cable K can be spliced in the splice cassettes N to the 'pigtails'. Optical fibers from a customer cable U can be spliced in the same way, to pigtails. Optionally, customer cables U can be pre-connectorized to save installation time (no fiber splicing needed), to be coupled to a connector unit M directly.

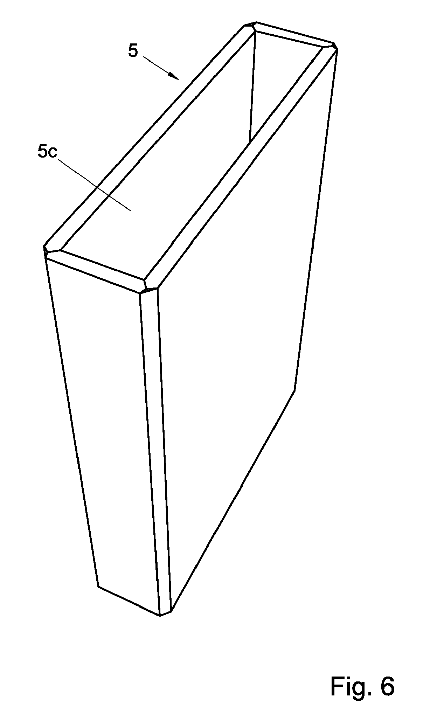

Preferably, the patch box 1 includes a dedicated patch cord storage means 5 (shown in figures 1-2, 6-9, 10) for storing the patch cords P, particularly for storing excessive length of each of the cords P. As is shown in figures 1-2, 7-9, the present patch cord storage means 5 is a storage box 5, for example having side walls and a bottom wall enclosing a storage space for receiving at least part of each patch cord P. The patch cord storage space can be accessed via a pull out opening 5c (located opposite said bottom wall).

In the example, the storage box 5 is positioned such that the pull out opening 5c is spaced-apart from an opposite wall (in this case a top wall) of the patch box 1. Besides, the storage box 5 is positioned spaced-apart from the modules 3, 4. From figures 1-2 it follows that in the present example, the patch cord storage box 5 extends opposite lateral sides of a number of the modules 3, 4, between the modules 3, 4 and the second door 1b (when the door 1b is in a closed state), in parallel with the door 1b. Between the patch cord storage box 5 and lateral sides of the modules 3, 4, a cord feeding space 1c (see Fig. 2) is present. Patch cord sections can be fed through this space 1c from the pull out opening 5c to patch cord receiving means 37 of respective modules 3, 4. The storage box 5 can be connected to the patch box 1 in different ways, for example to a rear and/or bottom wall of the patch box 1.

In this example, the patch cords P can be stored such that at least part of each patch cord P is still located in the patch cord storage means 5 when the cord interconnects two modules 3, 4 (i.e. when the two connectors of the cord P are connected to connector receivers of the modules 3, 4, thereby interconnecting the modules to allow signal transmission there-between).

Preferably, the interior of the patch cord storage box 5 is divided into separate compartments 5a for holding a plurality of patch cords P separately from each other. In the example, the storage box 5 includes an array of parallel compartments 5a (see Fig. 7), for example being divided by intermediate walls. For example, each of the compartments 5a can be dimensioned to slidingly hold a respective cord section, for example by having a thickness that is only slightly larger (for example in the range of 1% to 50%) than a thickness of a respective patch cord part to be held. Thus, entanglement of patch cord parts, of different cords, in the storage box 5 is prevented in an effective manner.

Preferably, during use, two end parts of each patch cord P (for example having cord connectors) are located outside the storage box 5 when the cord P is in a substantially stowed away position in the box 5 (as in Fig. 8). Also, during operation, the patch cord storage box 5 can enclose substantially U-shaped sections of the plurality of path cords P, side by side using the separate compartments 5a. Cord sections can also have different shapes when being held in the storage box 5, for example one or more substantially S-shapes, as will be clear to the skilled person. Cord parts that are present in the box 5 can be pulled out via the opening 5c, out by pulling said end parts, as is indicated by arrows in Fig. 8.

Preferably, the pull-out opening of the cord storage box 5 has been being divided by a divider 5b, for example a blocking element extending transversally through the opening and along each of the compartments 5a, for blocking full withdrawal of patch cords P. In the example, the divider 5b divides the opening into two sections, opposite cord parts of each patch cord P passing through each section.

According to a further embodiment, the cord storage box 5 is positioned such that, after mounting, the patchcords P can be (at least partly) stored vertically therein. In that case, gravity can act for letting down each cord P in its compartment 5a.

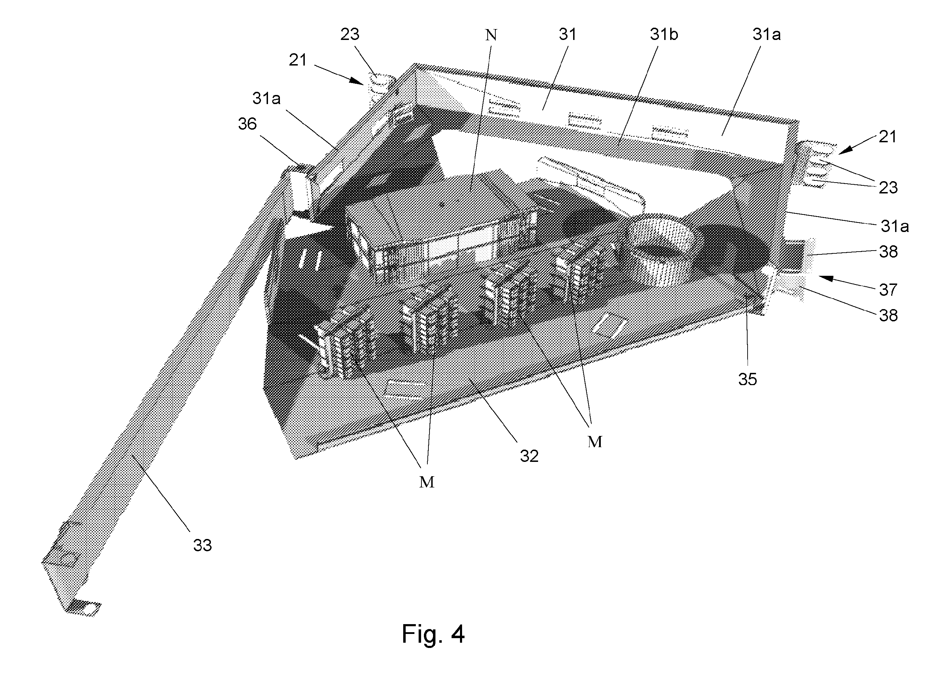

According to a preferred embodiment, each first and second module 33, 34 includes a frame 31 that can be rigidly connectable to a holder part of the box 1 (using above-mentioned attachment means 21, 22). The present frame 31 is provided with a bottom wall 31b (see Fig. 4), and three elongated, upstanding side walls 31a extending along three sides of the bottom wall 31b. Above-mentioned coupling lips 21 extend normally from two of the side walls 31a, in this non-limiting embodiment.

Each module frame 31 has been provided with a respective cable connector part 32, having the means for transmission of (optical) signals between cables/cords that are connected there-to. In the example, the cable connector parts 32 each include a mounting plate 32a, carrying the various patch components (such as connector receivers, as mentioned above) for connecting cable(s) and patch cord(s) during patching.

Also, in the example, each module has been provided with an optional, adjustable covering 33 for covering the respective cable connector part (along a side facing the first door 1a of the patch box 1, as in Fig. 1).In the example, the covering (in a closed position) extends along a fourth side if the bottom wall 31b of the frame 31.

The respective module includes a patch cord receiving means 37, in this case a patch cord passage 37 (located in one of the upstanding side walls 31a of the frame 31). During operating, an end part of a patch cord P can be fed via the patch cord passage 37 towards a respective mounting plate 32a, to be connected to a suitable patch component thereof. The patch cord receiving means 37 can also be used for feeding one or more cables K, U to a respective mounting plate 32a. Preferably, during operation, any patch cord P and cable K, U that is to be connected to a module 3, 4 is fed through the patch cord receiving means 37 of that module.

Optionally, guiding elements 38, for example two spaced-apart flaps or platelets (see Figures 3, 4), are located at the inlet to the passage 37, for example to enhance positioning of a cord/cable with respect to that passage 37, and/or for locally supporting a cord and/or cable. Particularly, the flaps can act as a guidance and a bend radius control for the patch cords P, thereby preventing damaging those cords P during operation.

Each cable connector part 32 has been adjustably connected to the respective frame 31, between a first position (shown in Figures 2, 4) in which the respective mounting plate 32a reaches away from the frame 31, for connecting or disconnecting a patch cord P thereto, and a second, stowed away, position (shown in Figures 1, 5) in which the mounting plate 32a substantially abuts the frame's bottom wall 31b. To this aim, in the example, the cable connector parts 32 are all pivotally connected to the module frames 31, over a respective first pivot axis 35, between the first and second position. As follows from the drawings, the first pivot axes 35 of the each cable connector parts 32 are all located at module sides that face the second door 1b of the box 1, i.e. near the patch cord storage box 5.

Advantageously, the patch cord receiving means (passages) 37 are all located at or near respective first pivot axes 35 (for example at a distance of about 1 cm or smaller). Thus, a pivoting of the mounting plate 32a with respect to the stationary module frame 31 will lead to no or only a very small change of a patch length between a patch component of that plate 32a and the passage 37. As a result, the mounting plate 32a can be smoothly repositioned (i.e. pivoted from a first to second position and vice-versa), without being hampered by a cord P and/or cable K, U that is coupled thereto (via a respective patch component), and without subjecting such a cord and/or cable to excessive force during the pivoting movement.

Further, in the present embodiment, each covering 33 for covering the cable connector part includes a lid that is pivotal over a second pivot axis 36, the second pivot axis being located at a frame edge opposite the first pivot axis, and being parallel there-to. Opening of the lid can be achieved after the first door 1a of the patch box has been opened (see Fig. 2). Opening of a lid allows access to a respective cable connector part 32, which can then be moved from a said second to a respective first position.

During operation, initially, the patch box 1 can be in a condition as is shown in Figure 1, which all modules 3, 4 being in closed conditions (with cable connector parts 32 in first positions), and with the doors 1a, 1b being closed (and optionally locked). Preferably, the patch cord storage box 5 includes a plurality of patch cords P, such as shown in Fig. 8).

In case a patching operation is desired, the patch box 1 can be opened, by unlocking the doors 1a, 1b (in case they have been locked) and opening the doors 1a, 1b. After opening, one or more modules 3, 4 can be removed from the patch box 1, replaced, and/or added.

Subsequently, modules 3, 4 can be selected for the patching operation. Coverings 33 of selected modules 3, 4 can be pivoted to opened positions (as in Fig. 2-4). Subsequently, respective cable connector parts 32 can be swung out of the patch box, towards the operator, allowing access to respective patching components. Then, one or more cables K, U and one or more patch cords P can be connected or disconnected, depending on the type of patching desired (for example, operator cables K being connected to operator modules 3, and customer cables U being connected to customer modules 4).

In case a new patch is to be made, a patch cord P can be drawn from the storage box 5, to be connected to respective modules 3, 4, part of the cord P preferably remaining in the storage box 5 as is shown in Fig. 9. Access to the patch cord P is simplified by using the side opening of the box 1, the side opening resulting from opening the second door 1b. As has been mentioned above, end sections of a pulled out patch cord P are preferably passed through the patch cord receiving passage 37 of a module, as part of the patching operation. Also, preferably, any cable K, U that is to be patched is passed through a receiving passage 37 of a respective module.

In case a patch is to be undone, a patch cord P can be detached from respective modules 3, 4, to be returned to a respective compartment of the storage box 5.

When patching (and/or unpatching) has been completed, the cable connector parts 32 of respective modules can be returned to their second positions, and the coverings 33 and doors 1a, 1b can be closed.

Thus, the present invention provides a compact modular patch box, allowing swift and efficient patching operations. The box 1 is configured for providing a very convenient way of locally storing patch cords P, and can prevent entanglement of cords and cables during patching.

By using pivoting module parts 32, and by guiding the patchcord along the hinges 35 of the pivoting module parts, the modules can be opened without disturbing already connected patchcords. Due to the modular configuration, patching components can be added when required without disturbing existing services, for example to customers in a building (in which the patch box is mounted).

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims

## Claims

1. Modular patch box, comprising:
- at least one first module (3), for example an operator module, connectable to a first cable;
- at least one second module (4), for example a customer module, connectable to a second cable;
- at least one patch cord for interconnecting a first and second module;
- at least one patch cord storage means (5) for storing the patch cords, such that at least part of the patch cord is located in the patch cord storage means when the cord interconnects two modules (3, 4).

2. A patch box according to claim 1, configured to hold a plurality of first modules (4), and a plurality of second modules (3).

3. A patch box according to any of the preceding claims, wherein each cable, each patch cord, each first module and each second module are configured for transmission of optical signals.

4. A patch box according to any of the preceding claims, wherein each first and/or second module includes a cable connector part that is adjustable between a first position, for connecting or disconnecting a patch cord thereto, and a second, stowed away, position.

5. A patch box according to claim 4, wherein the cable connector part is pivotal, over a first pivot axis, between the first and second position.

6. A patch box according any of the preceding claims, wherein each first and/or second module includes a frame that is connectable to a holder part of the box, the frame being provided with a cable connector part, and a covering for covering the cable connector part.

7. A patch box according to claims 5 and 6, said covering for covering the cable connector part having a lid that is pivotal over a second pivot axis, the second pivot axis preferably being located at a frame edge opposite the first pivot axis, and being parallel there-to.

8. A patch box according to claim 5 or 7, wherein the respective module includes a patch cord receiving means that is located at or near the first pivot axis.

9. A patch box according to any of the preceding claims, the patch cord storage means (5) being configured to enclose U-shaped sections of a plurality of path cords, side by side, particularly in separate compartments.

10. A patch box according to any of the preceding claims, the patch cord storage means (5) defining a patch cord pull-out opening for each patch cord, each pull-out opening preferably being divided by a divider, for blocking full withdrawal of patch cords.

11. A patch box according to any of the preceding claims, having a first door (la) for covering a first side, for example for access to the first and second modules.

12. A patch box according to any of the preceding claims, having a second door (1b) for covering a second side, for example for access to the patch cord storage means.

13. A patch box according to any of the preceding claims, wherein each first and second module is provided with a number of patch units (M), each patch unit (M) including pairs of cable connector receivers and respective patch cord connector receivers.

14. A patch box according to any of the preceding claims, wherein each first and second module is provided with a number of splice cassettes (N) for holding spliced cable fiber parts.
